# EUROPEAN PATENT APPLICATION

(11) **EP 4 625 777 A1**
(43) Date of publication of application: **01.10.2025**
(21) Application number: 23894384.9
(22) Date of filing: 01.11.2023
(51) Int. Cl.: H02K 5/22, H02K 21/22

(54) **ROTARY ELECTRIC MACHINE**

(30) Priority: 25.11.2022 JP 2022188689
(71) Applicant: DENSO CORPORATION, Kariya-city, Aichi 448-8661 (JP)
(72) Inventor: MAWATARI, Yuki, Kariya- city, Aichi 4488661 (JP)
(74) Representative: Kuhnen & Wacker Patent- und Rechtsanwaltsbüro PartG mbB
(86) International application number: PCT/JP2023/039470
(87) International publication number: WO 2024/111372

(57) **Abstract**

In a rotary electric machine (10), a rotor (20) is located outside a stator (30) in a radial direction. The rotary carrier (21) has a first end plate portion (24) provided at one end of the rotor in an axial direction and extending in the radial direction, and the other end of the rotor in the axial direction is open. A base (33) has a second end plate portion (35) provided at one end of the stator in the axial direction and extending in the radial direction, and the other end of the stator in the axial direction is open. A stator winding (31) is connected to a wiring unit (60, 70) that supplies electric power to the stator winding. The first end plate portion of the rotary carrier and the second end plate portion of the base are arranged facing each other on the same side among both sides in the axial direction. The wiring unit is drawn out from the second end plate portion to an intermediate portion in the axial direction through a separation region between the first end plate portion and the second end plate portion and a through hole (82a) provided in the second end plate portion and penetrating in the axial direction.

## Description

### CROSS REFERENCE TO RELATED APPLICATION

This application is based on Japanese Patent Application No. 2022-188689 filed on November 25 2022, the disclosure of which is incorporated herein by reference.

### TECHNICAL FIELD

The disclosure in this specification relates to a rotary electric machine.

### BACKGROUND ART

As a rotary electric machine, an outer-rotor type rotary electric machine is known, in which a rotor is arranged on an outer side in a radial direction and a stator on an inner side in the radial direction (see, for example, Patent Literature 1). In this outer-rotor type rotary electric machine, magnets are held by a rotary carrier that has a bottomed cylindrical (cup-shaped) shape, and the stator with stator windings is housed in the rotary carrier.

### PRIOR ART LITERATURE

### PATENT LITERATURE

Patent Literature 1: JP 2021-052485 A

### SUMMARY OF THE INVENTION

The rotary electric machine has a wiring module and a wiring unit. The wiring module includes busbars which are connected to the stator windings. The wiring unit has power leads that allow power to be supplied to and from the wiring module. The wiring module and the wiring unit are installed near an end plate portion at one end of an axial direction of the rotary carrier, or in other words, near a bottom part of the rotary carrier, which is a cylindrical shape with a bottom. An example of such a configuration is where the end plate portion of the rotary carrier and an end plate of a stator holder, to which the stator windings are attached are placed on one side of the axial direction, and a bearing is then mounted between the two end plates to rotatably support the rotary carrier (rotor). In this case, a cavity formed in the stator holder can be opened at one end in the axial direction and used as a component housing space. For example, when a rotary electric machine is used as an in-wheel motor, a brake device or the like may be placed in the cavity of the stator holder.

The wiring unit such as the busbars may be placed on the opposite side of the open side, i.e., the end plate portion side (bottom part side) of the rotary carrier, when the cavity in the stator holder is opened to one end in the axial direction. In this case, an installation location of the wiring unit is restricted, which may require technical innovations. Even if the end plate of the rotary carrier and the end plate portion of the stator holder are not necessarily located on one side in the axial direction, it is conceivable that wiring unit could be located on the end plate side (bottom part side) of the rotary carrier, and in such cases, the same technical innovations would be required.

The present disclosure has been made in view of the above issues, and an object of the present disclosure is to provide a rotary electric machine capable of suitably arranging a wiring unit connected to a stator winding.

The disclosed aspects in this specification adopt different technical solutions from each other in order to achieve their respective objectives. The objects, features, and advantages disclosed in this specification will become apparent by referring to following detailed descriptions and accompanying drawings.

In a first aspect, a rotary electric machine includes a rotor and a stator. The rotor has a magnetic flux generating unit that generates magnetic flux at each circumferentially aligned magnetic pole and a cylindrical rotary carrier that holds the magnetic flux generating unit. The stator has a stator winding and a cylindrical base to which the stator winding is assembled. The rotary electric machine is an outer rotor type, meaning the rotor is arranged outside the stator in the radial direction. The rotary carrier has a first end plate portion at one end of the rotor in the axial direction, extending radially, with the other end of the rotor being open in the axial direction. The base has a second end plate portion at one end of the stator in the axial direction, extending radially, with the other end of the stator being open in the axial direction. The stator winding is connected to a wiring unit that supplies electric power to the stator winding. The first end plate portion of the rotary carrier and the second end plate portion of the base are arranged facing each other on the same side in the axial direction. The wiring unit extends from the second end plate portion to an intermediate portion in the axial direction, passing through a separation region between the first and second end plate portions and a through hole in the second end plate portion that penetrates in the axial direction.

In the above configuration, in an outer rotor type rotary electric machine, the rotor has the cylindrical rotary carrier and the stator has the cylindrical base, and the first end plate portion of the rotary carrier and the second end plate portion of the base are arranged facing each other on the side of one end in the axial direction, while the other end of the rotary carrier and the base in the axial direction The other side of the rotary carrier and the base is open. As a result, an inner cavity of the base can be used effectively. The wiring unit connected to the stator winding is drawn out from the second end plate portion on a center part in the axial direction through the separation region between each end plate portion and the through hole in the second end plate portion of the base. As a result, power lines can be suitably drawn out while efficiently utilizing a space between the first end plate portion of the rotary carrier and the second end plate portion of the base, which face each other in the axial direction. As a result, the wiring unit connected to the stator winding can be suitably arranged.

In a second aspect, the rotary electric machine includes a stator winding that is a multiphase winding with multiple phase windings. Each phase has a power line provided as the wiring unit. The power lines are integrated with insulating material to form a relay wire member. Each power line is drawn out through the through hole to the intermediate portion in the axial direction from the second end plate portion, while the relay wire member is attached to the base.

According to the above configuration, the power lines of each phase are installed together as the relay wire member, and the relay wire member is attached to the base. In an installed state, each power line is drawn out from the second end plate portion to the center part in the axial direction through the through hole. As a result, each of those power lines can be suitably drawn out to the open side of the base in a configuration with multiple power lines per phase.

In a third aspect, the power lines are arranged in the circumferential direction, the relay wire member is a flat plate, and the relay wire member is attached to the base in a state that a flat surface of the relay wire member faces a radially inner surface of the base.

The relay wire member is configured to be formed as a flat plate with each power line lined up in the circumferential direction and attached to the base with the flat surface facing the inner surface of the base. As a result, the relay wire member (the power line) is prevented from becoming an obstacle in utilizing the hollow space on the inner circumference of the base.

In a fourth aspect, the rotary electric machine includes a relay wire member attached to the base at a distance from the radially inner surface of the base.

The relay wire member is attached to the base at a distance from the inner surface of the base, so that even if the base becomes hot during operation of the rotary electric machine, the relay wire member is less affected by the heat of the base.

In fifth aspect, the rotary electric machine has a wiring unit that includes a busbar and a power line. The busbar is provided in the separation region between the first end plate portion and the second end plate portion in an annular shape and is connected to a coil end portion of the stator winding. The power line is connected to the busbar at the separation region and inputs and outputs electric power to the stator winding. The power line is drawn out from the second end plate portion through the through hole to the intermediate portion in the axial direction.

In the separation region between each end plate portion, the annular busbar is provided and also configured to connect the busbar to the power line. The power line is drawn out to the center of the axial direction from the end plate portion through the through hole. In this case, the busbar can be installed and connected to the power line in an area isolated from the cavity of the base by the end plate portion, and a suitable configuration can be realized in terms of protection of those busbars and the power line connections.

In a fifth aspect, the rotary electric machine has a coil end portion of the stator winding that protrudes axially from an end face of the base in the axial direction. The busbar is located on the inner side of the coil end portion in the radial direction. The busbar is electrically connected to the power line on the inner side of the busbar in the radial direction. The power line has a bent portion that is cranked radially outward from the connection with the busbar.

In the configuration in which the annular busbar is disposed on the inner side of the coil end portion of the stator winding in the radial direction, and the busbar and the power line are electrically connected on the inner side of the busbar in the radial direction, the busbar and the power line connection portion are disposed side by side in the radial direction, the shaft length of the rotary electric machine can be shortened by arranging the coil ends of the stator winding, the busbar and the power line connection in the radial direction. In this case, the power line connection (connection between the busbar and the power line) is located in the radial direction, but by providing a crank-shaped bend in the power line, the power line can be placed closer to the inner circumference wall of the base on the inner circumference side of the base, which in turn contributes to effective use of a hollow space on the inner circumference side of the base.

In a seventh aspect, the rotary electric machine has a stator winding with a phase winding that includes partial windings per phase. Each partial winding is an air-core coil. The partial winding includes a pair of intermediate conductor portions provided at a predetermined distance in the circumferential direction, and crossing portions provided at one end and the other end of the pair of intermediate conductor portions in the axial direction, connecting the pair of intermediate conductor portions in a circular manner. The intermediate conductor portions of each of the different partial windings are arranged in close proximity and in the circumferential direction. A position regulating unit is provided at an open end of the base on the opposite side of the second end plate portion in the axial direction and projects outwardly in the radial direction to regulate the position of the crossing portions of the partial winding.

In the above configuration, the stator winding has partial windings that are air-core coils, and the crossing portion of the partial winding is position-restricted by a position regulating unit provided on the open end side of the base that extends outward in the radial direction. As a result, each of the partial windings, which are arranged side by side in the circumferential direction, is supported in a stable condition. Here, according to the above position regulation structure, it may be difficult to secure the installation space for busbar on the open end side of the base, but the busbar is arranged on the opposite side of the open end of the base as described above, which enables a suitable arrangement of busbar.

In an eighth aspect, the rotary electric machine includes a resin layer formed by resin molding in the separation region between the first end plate portion and the second end plate portion. This resin layer covers the coil end portion of the stator winding and the wiring unit.

According to the above configuration, the resin layer covers the connection portion between the coil end portion of the stator winding and the wiring unit in the separation region between the first end plate portion and the second end plate portion, thereby reducing inconveniences such as short circuits and deterioration due to exposure of the connection portion. In addition, because positioning of the wiring unit by the resin layer becomes possible, a configuration for positioning of the wiring unit can be simplified.

In a ninth aspect, the rotary electric machine includes a stator winding with a phase winding that includes partial windings per phase. Each partial winding is an air-core coil and includes: a pair of intermediate conductor portions provided at a predetermined distance in the circumferential direction; crossing portions provided at one end and the other end of the pair of intermediate conductor portions in the axial direction, connecting the pair of intermediate conductor portions in a circular manner. The intermediate conductor portions of each phase are arranged in close proximity to each other in the circumferential direction by placing one of the intermediate conductor portions of the partial winding of the other phase between the pair of intermediate conductor portions of the partial winding. The partial windings include: a first partial winding in which only the crossing portion on one end in the axial direction is bent inward in the radial direction; a second partial winding in which only the crossing portion on the other end in the axial direction is bent outward in the radial direction. The second end plate portion of the base is axially opposite to the crossing portion bent inward in the radial direction in the first partial winding. A resin layer is formed in an opposite portion by resin molding to cover a region including the wiring unit. An overhang provided at one end opposite to the second end plate portion in the axial direction and extending outward in the radial direction faces the crossing portion bent radially outward in the second partial winding in the axial direction from the same direction as the side of the second end plate portion. A resin layer is formed in a facing portion facing the overhang by resin molding.

According to the above configuration, the second end plate portion of the base is axially opposite to the crossing portion bent inward in the radial direction in the first partial winding, and the resin layer is formed by resin molding in the facing portion to the extent including the wiring unit. As a result, inconveniences such as shorts and deterioration caused by exposed the wiring unit are reduced in the area between the first end plate portion of the rotor carrier and the second end plate portion of the base.

At the axial end of the base on the opposite side of the second end plate portion, the overhang faces axially in the same direction as the side of the second end plate portion toward the crossing portion bent radially outward in the second partial winding. In this case, on both axial sides of the base (the side of the second end plate portion and the opposite side), resin filling can be performed from the same side in the axial direction, which simplifies the formation of the resin layer in a configuration having the resin layers on both axial sides.

In a tenth aspect, a rotary electric machine includes a rotor and a stator. The rotor has a magnetic flux generating unit that generates magnetic flux at each circumferentially aligned magnetic pole. The rotor also includes a rotary carrier that is cylindrical and holds the magnetic flux generating unit. The stator has a stator winding and a cylindrical base to which the stator winding is assembled. The rotary electric machine is an outer rotor type, meaning the rotor is arranged outside the stator in the radial direction. The rotary carrier has an end plate portion provided at one end of the rotor in the axial direction, extending in the radial direction. One end face of the base in the axial direction faces the end plate portion of the rotary carrier. The stator winding is connected to a wiring unit that supplies electric power to the stator winding. The wiring unit is arranged in an area including a separation region between the end plate portion and the base on the side facing the end plate portion of the rotary carrier, on both sides of the base in the axial direction. A resin layer covering a portion of the wiring unit is provided in the separation region, and the wiring unit is drawn out from the resin layer.

In the above configuration, in an outer rotor type rotary electric machine, the separation region is formed on both sides of the base in the axial direction opposite the end plate of the rotary carrier, the wiring unit is arranged in the area including the separation region, and the resin layer covering part of the wiring unit is provided in the separation region. As a result, the wiring unit can be fixed by the resin layer in the narrow separation region between the axial end face of the base and the end plate portion of the rotary carrier. The wiring unit is drawn out of the resin layer, which allows the power line to be suitably drawn out while efficiently utilizing a space between the axial end face of the base and the end plate portion of the rotary carrier. As a result, the wiring unit connected to the stator winding can be suitably arranged.

In an eleventh aspect, the rotary electric machine includes a wiring unit. The wiring unit includes a busbar provided in the separation region between the end plate portion of the rotary carrier and the end face of the base in the axial direction. The busbar is annular and connected to a coil end of the stator winding. A power line is connected to the busbar at the separation region and is responsible for the input and output of electric power to the stator winding. The resin layer has an overhang that extends radially inward from a cylindrical portion of the base. The wiring unit is drawn out from the end face of the overhang in the axial direction.

According to the above configuration, the overhang portion protruding radially inward from the cylindrical portion of the base is formed as the resin layer, and the wiring unit is drawn axially from the axial end face of the overhang portion. In this case, the wiring unit extending axially from one end of the stator in the axial direction can be suitably resin-molded at least to an extent including the coil end area.

In a twelve aspect, the rotary electric machine includes a stator winding with phase windings that consist of partial windings per phase. Each partial winding is an air-core coil. The partial winding includes a pair of intermediate conductor portions provided at a predetermined distance in the circumferential direction. It also includes crossing portions provided at one end and the other end of the pair of intermediate conductor portions in the axial direction, connecting the pair of intermediate conductor portions in a circular manner. The intermediate conductor portions of each phase are arranged in close proximity to each other in the circumferential direction by placing one of the intermediate conductor portions of the partial winding of the other phase between the pair of intermediate conductor portions of the partial winding. The partial windings include a first partial winding in which only the crossing portion on one end in the axial direction is bent inward in the radial direction. There is also a second partial winding in which only the crossing portion on the other end in the axial direction is bent outward in the radial direction. A first end portion of the base in the axial direction is axially opposite to the crossing portion bent inward in the radial direction in the first partial winding. The resin layer is formed in an opposite portion to a region including a portion of the wiring unit. An overhang provided at a second end portion of the base in the axial direction and extending outward in the radial direction faces the crossing portion bent radially outward in the second partial winding in the axial direction from the same direction as the side of the first end portion. A resin layer is formed in a facing portion facing the overhang by resin molding.

According to the above configuration, the axial end face of the first end of the base is axially opposite to the crossing portion bent inward in the radial direction in the first partial winding, and the resin layer is formed by resin molding in the facing portion to the extent including a part of the wiring unit. As a result, inconveniences such as shorts and deterioration caused by exposed the wiring unit are reduced in the between the axial end face of the base and the end plate of the rotor carrier.

On the second end side in the base, the overhanging portion faces the crossing portion bent radially outward in the second partial winding in the axial direction from the same direction as the first end side. In this case, on both axial sides of the base, resin filling can be performed from the same side in the axial direction, which simplifies the formation of the resin layer in a configuration having the resin layers on both axial sides.

### BRIEF DESCRIPTION OF THE DRAWINGS

The above and other objects, features and advantages of the present disclosure will become more apparent from the following detailed description made with reference to the accompanying drawings.
FIG. 1 is a perspective view illustrating a rotary electric machine.
FIG. 2 is a plan view of the rotary electric machine.
FIG. 3 is a cross-sectional view of the rotary electric machine.
FIG. 4 is a perspective view illustrating a stator.
FIG. 5 is an exploded perspective view of the stator.
FIG. 6 is an exploded perspective view of a stator holder and a relay wire member.
FIG. 7 is a perspective view of an assembly including the stator with resin mold.
FIG. 8 is a cross-sectional view of a mold attached to the stator.
FIG. 9 is an enlarged cross-sectional view of an area around a through hole in the stator holder.
FIG. 10 is a longitudinal cross-sectional view of a rotary electric machine according to a second embodiment.
FIG. 11 is a diagram illustrating a protruding portion of a coil end mold section.
FIG. 12 is a diagram illustrating a modification in the second embodiment.

### DETAILED DESCRIPTION

### First Embodiment

One embodiment of a rotary electric machine according to the present disclosure will be described below with reference to the drawings. The rotary electric machine according to the present embodiment is used, for example, as a power source for vehicles. The rotary electric machine may, however, be used widely for industrial, automotive, aerial, domestic, office automation, or game applications. In the following embodiments, the same or equivalent parts are denoted by the same reference numbers in the drawings, and explanation thereof in detail is omitted.

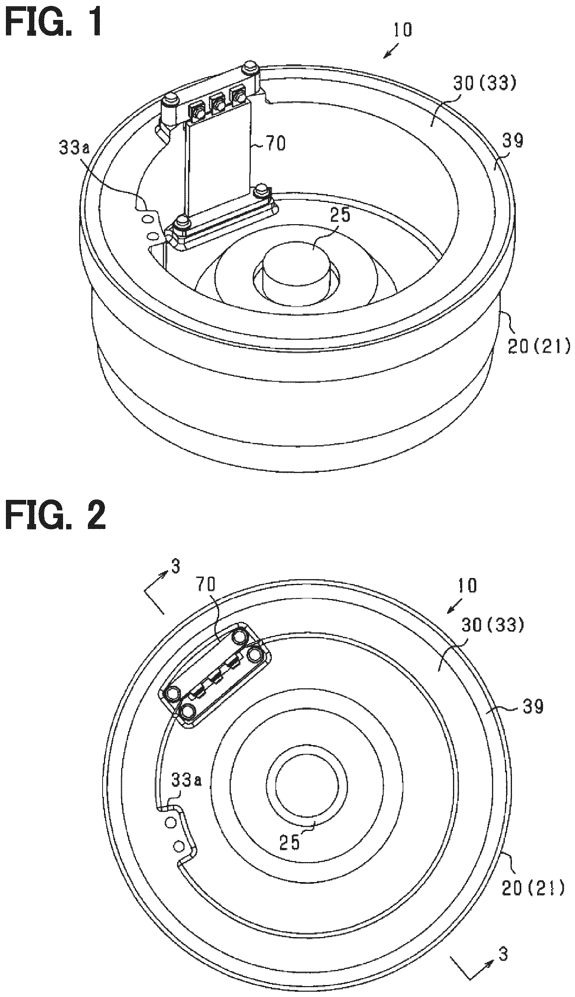

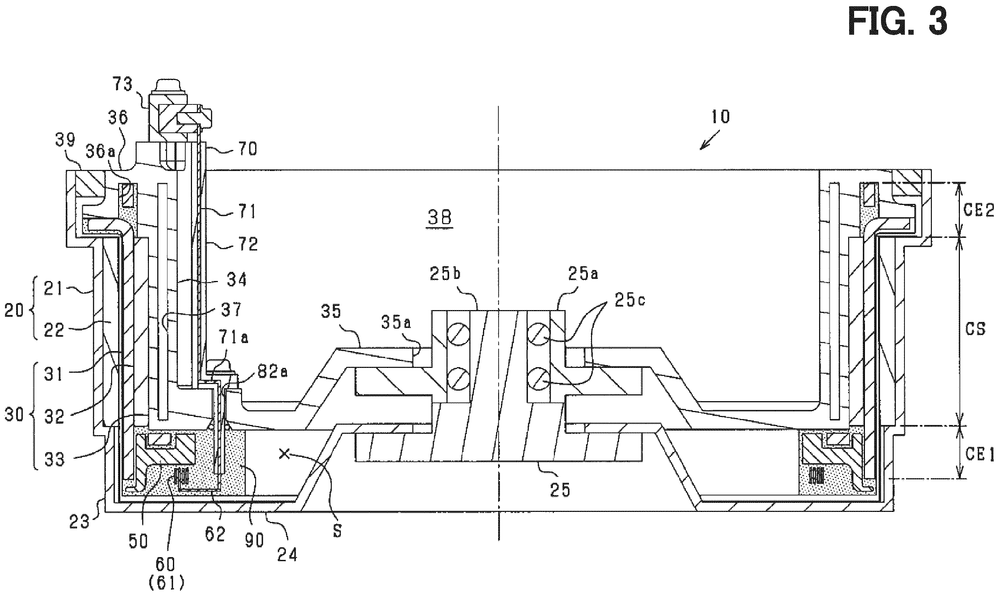

A schema of the rotary electric machine 10 is illustrated in FIGS. 1 to 3. FIG. 1 is a perspective view of the entire rotary electric machine 10, FIG. 2 is a plan view of the rotary electric machine 10, and FIG. 3 is a cross-sectional view of the rotary electric machine 10 (3-3 line cross-sectional view of FIG. 2). In the following description, in the rotary electric machine 10, a direction in which a rotation axis extends is defined as an axial direction, a direction extending radially from a center of the rotation axis is defined as a radial direction, and a direction extending circumferentially around the rotation axis is defined as a circumferential direction.

The rotary electric machine 10 is an outer-rotor type surface magnet multiphase AC motor, and has a rotor 20 and a stator 30 located inside the radial direction of the rotor 20. The rotor 20 and the stator 30 are each have a cylindrical shape and are arranged facing each other in the radial direction across a tubular air gap.

The rotary 20 includes a rotary carrier 21 having a substantially cylindrical shape, and a magnet unit 22 having a tubular shape and fixed to the rotary carrier 21. The magnet unit 22 corresponds to a "magnet flux generating unit". The rotary carrier 21 has a cylindrical portion 23 that has a cylindrical shape and an end plate portion 24 that is provided on one end of the cylindrical portion 23 in the axial direction and extends in the radial direction. The magnet unit 22 is fixed to a radially inner surface of the cylindrical portion 23. The other end in the axial direction of the rotary carrier 21 is open. The rotary carrier 21 functions as a magnet holding member.

The magnet unit 22 has magnets fixed to the radially inner surface of the cylindrical portion 23 of the rotary carrier 21. In the magnet unit 22, the magnets are provided side by side such that polarities are alternately changed along the circumferential direction of the rotor 20. Thereby, the magnetic poles are formed in the magnet unit 22 in the circumferential direction. The magnets are, for example, polar anisotropic permanent magnets, and are formed using sintered neodymium magnets having an intrinsic coercive force of 400 [kA/m] or more and a remanent flux density Br of 1.0 [T] or more. The rotary electric machine 10 may be an embedded magnet synchronous machine (IPMSM).

A bearing 25 is fixed to the end plate portion 24 of the rotary carrier 21 at a central part in the radial direction of the rotor 20. The bearing 25 has an outer ring member 25a as a stationary part, an inner ring member 25b as a rotating part, and rolling elements 25c (for example, balls) provided between the outer ring member 25a and the inner ring member 25b. The inner ring member 25b of the bearing 25 is fixed to the rotor 20 (end plate portion 24) and the outer ring member 25a is fixed to the stator 30. As a result, the rotor 20 is allowed to rotate relative to the stator 30.

The bearing 25 may be a hub bearing fixed to a hub, which is a center of rotation of a wheel, when the rotary electric machine 10 is configured as an in-hole motor to be assembled to the wheel, for example, not shown. The inner ring member 25b, which is a rotating body, may have a shaft fixed to it that extends in the axial direction at the radial center of the rotary electric machine 10. For example, when the rotary electric machine is used as an in-wheel motor, a brake disc of a brake system should be fixed to its shaft and a brake caliper should be fixed to the stator 30.

The stator 30 includes a stator winding 31, a stator core 32, and a stator holder 33. The stator core 32 is arranged on an outside of the stator holder 33 in the radial direction, and the stator core 32 and the stator holder 33 are integrated. The stator winding 31 is mounted on an outside of the stator core 32 in the radial direction. The stator holder 33 corresponds to a "base". An assembly of the stator core 32 and the stator holder 33 may be configured to correspond to the base.

The stator winding 31 has phase windings. The phase windings of respective phases are disposed in a predetermined order in the circumferential direction to be formed in a cylindrical shape. In the present embodiment, the stator winding 31 consist of three-phase windings of U-phase, V-phase, and W-phase. The stator core 32 has a cylindrical shape and is provided as a back yoke.

In the present embodiment, the stator 30 has a toothless structure without teeth for forming slots. This structure can be constructed using any of the following (A) through (C).
(A) The stator 30 includes a conductor-to-conductor member between each adjacent two of intermediate conductor portions 42 in the circumferential direction. As the conductor-to-conductor member, a magnetic material having a relationship of Wt × Bs ≤ Wm × Br is used, where Wt represents a width dimension in the circumferential direction of the conductor-to-conductor member in one magnetic pole, Bs represents a saturation magnetic flux density of the conductor-to-conductor member, Wm represents a width dimension in the circumferential direction of the magnet unit 22 in one magnetic pole, and Br represents a remanent flux density of the magnet that constitutes the magnet unit 22.
(B) The stator 30 includes a conductor-to-conductor member between each adjacent two of the conductor portions in the circumferential direction. A non-magnetic material is used as the conductor-to-conductor member.
(C) The stator 30 does not include a conductor-to-conductor member between each adjacent two of the conductor portions in the circumferential direction.

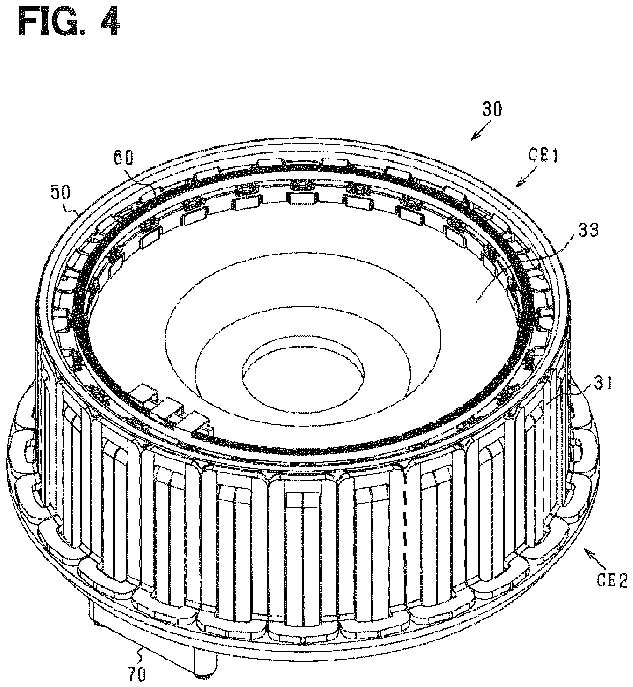

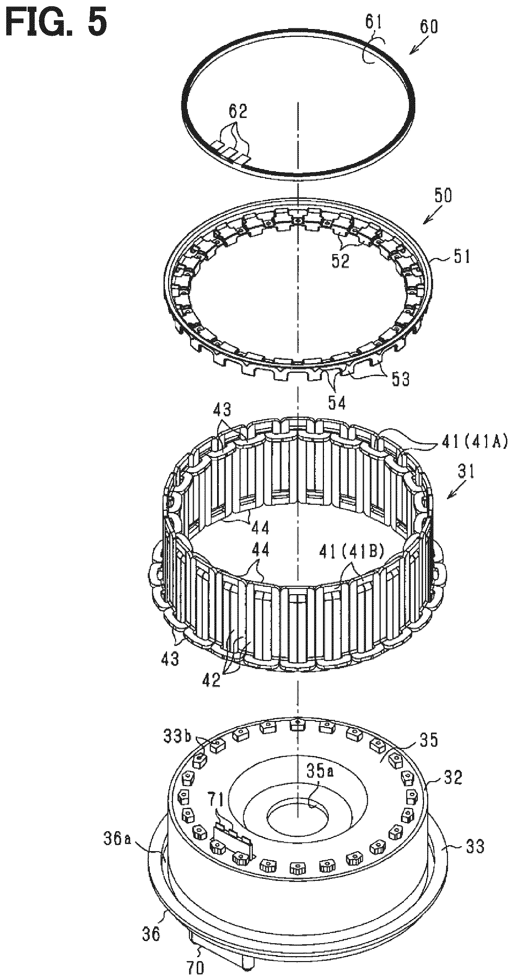

The more detailed configuration of the stator 30 is described next using FIGS. 3 to 5. FIG. 4 shows a perspective view of the stator 30 and FIG. 5 shows an exploded perspective view of the stator 30.

The stator winding 31 has partial windings 41, which are unit coils, and each of these partial windings 41 are arranged in a circumferential alignment. A partial winding 41 is an air-core coil composed of windings of conductor material, and has a pair of intermediate conductor portions 42 provided at predetermined intervals in the circumferential direction and a pair of crossing portions 43, 44 connecting the pair of intermediate conductor portions 42 at both ends in the axial direction respectively, and the pair of intermediate conductor portions 42 and the pair of crossing portions 43, 44 are formed into a tubular shape. The intermediate conductor portions 42 of each phase are arranged in close proximity to each other in the circumferential direction, since one of the intermediate conductor portions 42 in the partial winding 41 of the other phase is positioned between the pair of intermediate conductor portions 42 in the partial winding 41.

Each of the crossing portions 43, 44 on both sides in the axial direction is provided as a portion corresponding to the coil end. One of the crossing portions 43, 44 is bent in the radial direction, and the other of the crossing portions 43, 44 is not bent in the radial direction. Each partial winding 41 includes a partial winding 41 with the crossing portion 43 bent inward in the radial direction (partial winding 41A in FIG. 5) and a partial winding 41 with the crossing portion 43 bent outward in the radial direction (partial winding 41B in FIG. 5). In FIG. 4, in the stator 30, at a coil end area CE1 on one end of the axial direction (upper side of FIG. 4), the crossing portion 43 of the partial winding 41 is bent inward in the radial direction, and at a coil end area CE2 on the other end of the axial direction (lower side of FIG. 4), the crossing portion 43 of the partial winding 41 is bent outward in the radial direction.

As shown in FIG. 3, the stator holder 33 has a cylindrical portion 34 assembled inside the stator core 32 in the radial direction, an end plate portion 35 provided inside the cylindrical portion 34 in the radial direction at one end of the cylindrical portion 34 in the axial direction and extending in the radial direction, and an overhang 36 provided from the cylindrical portion 34 toward the outside in the radial direction at the other end in the axial direction. The stator holder 33 has the end plate portion 35 on the same side as the end plate portion 24 of the rotary carrier 21 in the axial direction. As a result, the rotary carrier 21 and the stator holder 33 have the respective end plate portions 24, 35 facing each other on one of the two ends in the axial direction and open on the other end. The end plate portion 24 of the rotary carrier 21 corresponds to a "first end plate portion" and the end plate portion 35 of the stator holder 33 corresponds to a "second end plate portion". In FIG. 5, the stator core 32 is shown assembled in the cylindrical portion 34 of the stator core 32.

In the cylindrical portion 34, a coolant flow path 37 through which a coolant such as cooling water flows is formed. The coolant flow path 37 extends in a flattened shape in the axial direction, and is provided annularly along the cylindrical portion 34. The coolant flow path 37 allows the coolant to flow in the circumferential direction between an inlet portion and an outlet portion. As shown in FIG. 1, an inner circumference of the cylindrical portion 34 has a protrusion 33a protruding inward in the radial direction, and the inlet and outlet portions of the coolant flow path 37 are provided at the protrusion 33a.

The cylindrical portion 34 preferably has a double structure including a radially outer cylindrical member and a radially inner cylindrical member to form the coolant flow path 37 by using a gap space between the outer cylindrical member and the inner cylindrical member. Although not illustrated, an external circulation path for circulating the coolant is connected to the coolant flow path 37. The external circulation path is provided with, for example, an electric pump, and a heat dissipation device such as a radiator. With the driving of the pump, the coolant circulates through the circulation path and the coolant flow path 37 of the rotary electric machine 10.

The outer ring member 25a of the bearing 25 is fixed to the end plate portion 35. The end plate portion 35 has a hole 35a in its center, through which the bearing 25 extends axially centerward in the cylindrical portion 34.

In the stator 30, an inner circumference of the cylindrical portion 34 of the stator holder 33 is a cavity 38. The cavity 38 corresponds to an inner hollow of the magnetic circuit unit consisting of the rotor 20 and the stator 30. In the present embodiment, the stator 30 has a teeth-less structure, which allows a radial thickness of the stator 30 to be reduced and the cavity 38 to be expanded in the radial direction. Although not shown, the cavity 38 can accommodate a brake system, a transmission, and a power conversion device.

In the present embodiment, the stator 30 with the teeth-less structure is configured to regulate a position of each partial winding 41 by means of a position regulating unit provided at the end in the axial direction. The composition of the position regulating unit is explained below using FIG. 5.

At the end of the coil end area CE2 in the axial direction, the overhang 36 of the stator holder 33 is provided as a position regulating unit. The overhang 36 is provided at a position outside the stator winding 31 in the axial direction, i.e., outside the crossing portions 43, 44, so that it extends outward in the radial direction. The overhang 36 has an annular groove 36a extending in the circumferential direction. The position of the crossing portion 44 of the partial winding 41A can be regulated in the radial direction by inserting the crossing portion 44 of the partial winding 41A into the annular groove 36a of the overhang 36. Although not shown, it is also possible to provide a protrusion protruding in the axial direction (upper side of FIG. 5) in the overhang 36 and to configure the protrusion to regulate the position of the crossing portion 43 in the partial winding 41B in at least one of the radial and circumferential directions.

A position regulating member 50 is assembled at the axial end of the coil end area CE1. The position regulating member 50 is annular in shape and is assembled to the stator holder 33 from the axial direction to provide position regulation of the winding end on the coil end area CE1.

The position regulating member 50 has a circular portion 51, which has holder engaging portions 52 that can engage with the stator holder 33, winding engaging portions 53 that can engage with the crossing portion 43 of the partial winding 41A, and winding engaging portions 54 that can engage with the crossing portion 44 of the partial winding 41B. The holder engaging portions 52 are provided at predetermined intervals in the circumferential direction and can engage protrusions 33b on an axial end face of the stator holder 33. The winding engagement portions 53 are provided at predetermined intervals in the circumferential direction and can engage with inner circumferential portions of the crossing portions 43 of the partial winding 41A. The winding engagement portions 54 are provided at predetermined intervals in the circumferential direction and can engage with outer circumferential portions of the crossing portions 44 of the partial winding 41B. The position regulating member 50 is secured to the stator holder 33 by bolts or other fixtures.

As shown in FIG. 3, at an opening end of the rotary carrier 21 in the stator 30, the rotary carrier 21 and the stator holder 33 are double-layered inside and outside in the radial direction, and a circular end ring 39 is assembled in a gap between these respective members.

As shown in FIGS. 4, 5, at the axial end of the stator 30, there is a circular wiring module 60 that is electrically connected to each partial winding 41 of the stator winding 31. The wiring module 60 has busbars 61 for each phase and for the neutral wire as conducting members. The wiring module 60 may consist of busbars 61 molded together in a resin mold, or busbars 61 may be integrated by means of an assembly tool. The wiring module 60 allows the partial windings 41 of each phase to be connected in parallel or series for each phase, and the phase windings of each phase are connected to the neutral point. The wiring module 60 is provided on the coil end area CE1, which is on a side opposite to the open side of the stator holder 33, of the coil end areas CE1, CE2 on both sides of the axial direction of the stator 30.

Each busbar 61 provided for each phase has a connection end 62 extending inward in the radial direction, and a power line 71 is connected to each of the connection ends 62 (see FIG. 3). The power lines 71 of each phase are integrated by insulating material to form a relay wire member 70, and a wiring structure including the relay wire member 70 is specifically described below.

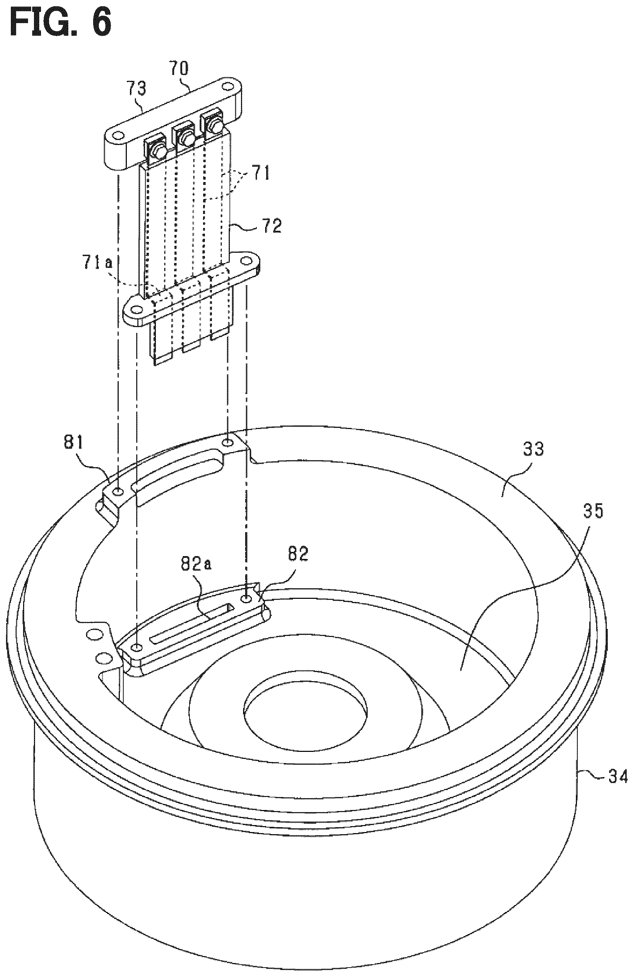

FIG. 6 is an exploded perspective view of the stator holder 33 and the relay wire member 70. As shown in FIG. 6, the relay wire member 70 has the power line 71 for three phases, a covering part 72 that covers the power line 71 with insulation material, and a terminal 73. In the relay wire member 70, the power lines 71 are made of plate conductors (busbars) and are covered in a circumferential arrangement. Each of the power lines 71 is arranged in a row so that the busbar plate surfaces are aligned in a straight line. As a result, the relay wire member 70 has a flat plate shape. Each power line 71 may be arranged with the plate surfaces inclined toward each other to align with the inner curvature of the stator holder 33.

In the stator holder 33, the cylindrical portion 34 and the end plate portion 35 each have a fixed portion 81, 82 to which the relay wire member 70 is fixed. The relay wire member 70 is secured to the fixed portions 81, 82 with screws or other fixings. Here, in particular, the fixed portion 82 on the end plate portion 35 has a through hole 82a regarding the end plate portion 35 in the axial direction, and the relay wire member 70 is attached with a portion of the relay wire member 70 being inserted into the through hole 82a. FIG. 5 shows a portion of the relay wire member 70 protruding outside of the end plate portion 35 in the stator holder 33.

As shown in FIG. 3, the relay wire member 70 is attached to the stator holder 33 with its flat surface facing the radially inner surface of the stator holder 33. The relay wire member 70 is attached to the stator holder 33 at a distance from the radially inner surface of the stator holder 33.

A separation region S is formed between each end plate portion 24, 35, when the rotor 20 is assembled to the stator 30. The wiring module 60 (busbar 61) is provided in the separation region S. The power line 71 is electrically connected to the connection end 62 of the busbar 61 on the inner side of the wiring module 60 in the radial direction. In this case, the wiring unit of the stator winding 31 (wiring module 60 and relay wire member 70) is drawn out to the center of the axial direction from the end plate portion 35 through both the separation region S between each end plate portion 24, 35 and the through hole 82a in the end plate portion 35 of the stator holder 33. The terminals 73 is connected to an unshown inverter to input and output power to the stator winding 31. A current sensor that detects the phase current of each phase may be integrally provided in the wiring module 60. The power line 71 may also include a sensor signal line.

Here, the coil end portion of the stator winding 31 protrudes axially from an end face of the stator holder 33 in the axial direction, and the wiring module 60 (busbar 61) is located inside the radial direction of the coil end portion. The wiring module 60 is electrically connected to the power line 71 on the inner side of the wiring module 60 in the radial direction. In this case, a position of a power line connection (a position of connection between busbar 61 and the power line 71) is located closer to the inside in the radial direction, given arrangement of these various components. This means that when the power line 71 is extended in the axial direction from the position of the power line connection, the power line 71 is separated from the radially inner surface of the stator holder 33. Therefore, in the present embodiment, the power line 71 is configured with a bent portion 71a at a midway position of the power line 71 that is cranked outward in the radial direction from the connection end 62 of the busbar 61. As a result, the power lines 71 can be placed closer to the inner wall of the stator holder 33 on the inner circumference of the stator holder 33.

In the present embodiment, the stator winding 31 and the wiring module 60 are assembled to the stator holder 33, and resin molding is applied to the assembly. In this case, a resin layer 90 is formed at least to the extent of including each coil end area CE1, CE2 on both sides in the axial direction. More specifically, on the coil end portion CE1 side, the resin mold is applied to an outer side of the axial end face of the stator holder 33 so as to include the radial inner side of each of the crossing portions 43, 44 of the stator winding 31. In this case, on the coil end area CE1 side, the resin layer 90 is formed by resin molding in the separation region S between each end plate portion 24, 35, covering the coil end of the stator winding 31 and the wiring unit.

On the coil end area CE2 side, the resin mold is applied to the annular groove 36a side of the overhang 36 of the stator holder 33 so as to include the radial outer side of each of the crossing portions 43, 44 of the stator winding 31.

In short, on the coil end area CE1 side, the end plate portion 35 of the stator holder 33 axially faces the crossing portion 43 bent inward in the radial direction in the partial winding 41 (partial winding 41A shown in FIG. 5), and the resin layer 90 is formed on a facing portion to an extent including the wiring unit. On the coil end area CE2 side, the overhang 36 provided at an axial end opposite to the end plate portion 35 faces the crossing portion 43 bent radially outward in the partial winding 41 (partial winding 41B shown in FIG. 5) in the axial direction from the same direction as the side of the end plate portion 35, and the resin layer 90 is formed on a facing portion.

The resin layer 90 is formed within a range including the wiring module 60, so that even if a position of the wiring module 60 is simply determined, that is, even if the wiring module 60 is temporarily fixed before resin filling, the position of the wiring module 60 can be properly maintained.

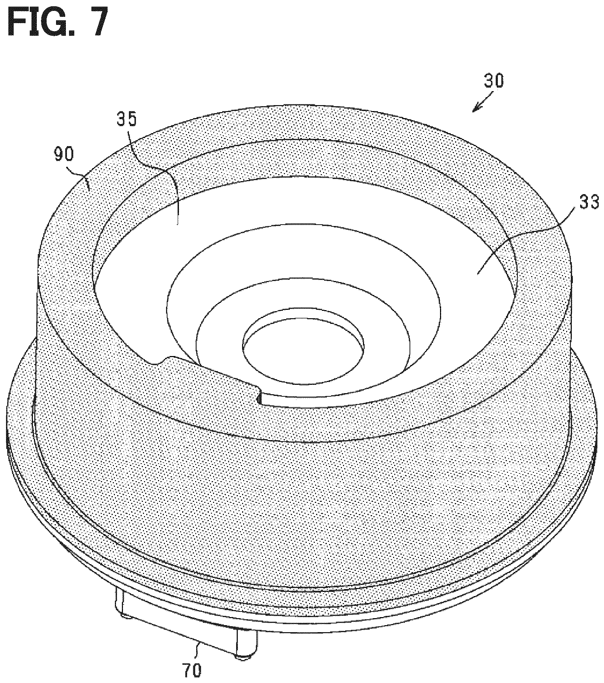

FIG. 7 shows a perspective view of the resin mold applied to the assembly of the stator 30 and the wiring module 60. In this FIG. 7, a dot-imparting area is the resin layer 90, and the resin layer 90 is formed by resin molding in the area including the coil end areas CE1, CE2 and the coil side area CS on both sides of the axial direction.

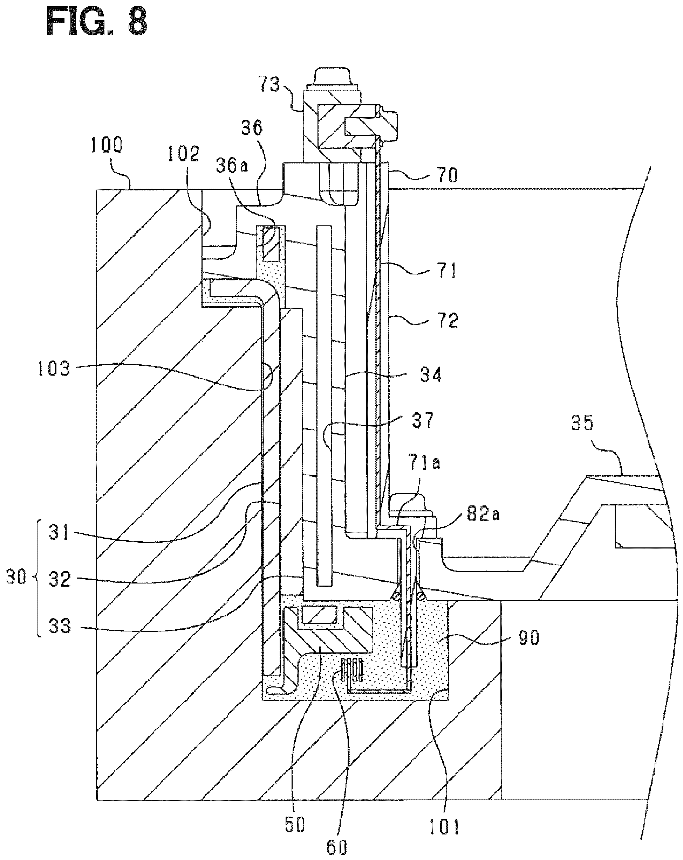

Next, a procedure for making the resin layer 90 in the stator 30 is described. Here, after the stator 30 shown in FIG. 4 is fabricated, the resin layer 90 is molded using a mold 100 shown in FIG. 8.

In detail, the mold 100 has an annular recess 101 for forming a resin filling chamber on the coil end area CE1 side and an annular recess 102 for forming a resin filling chamber on the coil end area CE2 side. The annular recesses 101, 102 are circular in the circumferential direction, respectively. With the stator 30 set in the mold 100, an inner wall of the annular recess 101 and the axial end face of the stator holder 33 form a resin filling chamber on the coil end area CE1 side, and resin is filled into that resin filling chamber to collectively resin-mold lower ends of the crossing portions 43, 44, the position regulating member 5 0, the wiring module 60, and a bottom end of the relay wire member 70. When the stator 30 is set in the mold 100, the inner wall of the annular recess 102 and the overhang 36 of the stator holder 33 form a resin filling chamber on the coil end area CE2 side, and resin is filled into that resin filling chamber to collectively resin-mold the crossing portions 43, 44 and the position regulating member 50 on the coil end area CE2 side.

In the mold 100, an inner diameter dimension of an intermediate portion 103 between the annular recesses 101, 102 is larger than an outer diameter dimension of the stator winding 31, so that a small gap is formed between the inner wall of the intermediate portion 103 and the outer circumference of the stator winding 31. Therefore, during the resin filling process, the resin is also distributed to the periphery of the stator winding 31. Although not shown, the mold 100 has a resin inlet on the annular recess 101, for example. However, the resin inlet may be provided on the annular recess 102, or both the annular recesses 101, 102 may have resin inlets.

In the present embodiment, the resin filling is possible from the same side of the stator holder 33 in the axial direction on both sides of the stator holder 33 (the side of the end plate portion 35 and the opposite side). Therefore, the mold 100 only needs to be attached to the stator holder 33 from one side in the axial direction, which simplifies formation of the resin layer 90 in a configuration with the resin layers 90 on both sides in the axial direction.

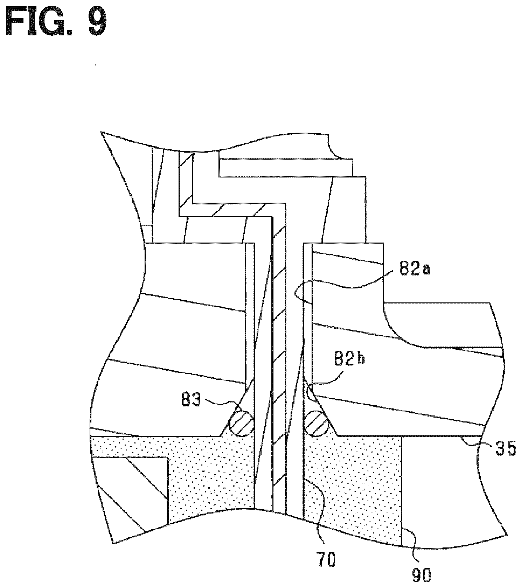

As shown in FIG. 9, the through hole 82a in the end plate portion 35 of the stator holder 33 may be tapered in crossing portion with an outside of the axial direction, that is, the resin filling chamber side, becoming wider, and a seal member 83 (for example, rubber bush) may be assembled in a tapered portion 82b. In this case, during the resin filling process, pressure is high in the resin filling chamber, and the pressure pushes the seal member 83 toward the back (i.e., toward the reduced diameter). As a result, the resin material is suitably restrained from leaking out to the inner circumference of the stator holder 33.

After the resin filling process is completed, the resin is cured by heat treatment, and when the mold 100 is removed, the assembly shown in FIG. 7 is completed. The rotor 20 is then assembled to the stator 30.

It is possible to obtain the following excellent effects according to the present embodiment described in detail.

In the outer rotor type rotary electric machine 10, the rotor 20 has the cylindrical rotary carrier 21 and the stator 30 has a cylindrical stator holder 33, and the end plate portion 24 (first end plate) of the rotary carrier 21 and the end plate portion 35 (second end plate) of the stator holder 33 are arranged opposite each other on the side of one end in the axial direction. On the other hand, the other side of the rotary carrier 21 and the stator holder 33 is open in the axial direction. As a result, the cavity 38 of the stator holder 33 can be used effectively. The wiring unit is connected to the stator winding 31. The wiring unit is drawn out through the separation region S between the end plate portions 24, 35 and the through hole 82a in the end plate portion 35 of the stator holder 33, to the axial center side of the end plate portion 35. As a result, the power line 71 can be suitably drawn out while efficiently utilizing a space between the end plate portions 24, 35, which face each other in the axial direction. As a result, the wiring unit connected to the stator winding 31 can be suitably arranged.

The power line 71 of each phase are provided in one piece as the relay wire member 70, and the relay wire member 70 is attached to the stator holder 33. In that installed state, each power line 71 is configured to be pulled out from the end plate portion 35 to the axial center side through the through hole 82a in the end plate portion 35. As a result, each of those power lines 71 can be suitably drawn out to the open side of the stator holder 33 in a configuration with multiple power lines 71 per phase.

The relay wire member 70 is configured to be attached to the stator holder 33 with each power line 71 lined up in the circumferential direction to form a flat plate and with the flat surface facing the radially inner surface of the stator holder 33. As a result, the relay wire member 70 (the power line 71) is prevented from becoming an obstacle in utilizing the hollow space on the inner circumference of the stator holder 33.

The relay wire member 70 is configured to be attached to the stator holder 33 in a state spaced apart from the radially inner surface of the stator holder 33. As a result, the relay wire member 70 is less affected by the heat of the stator holder 33 even when the stator holder 33 becomes hot during operation of the rotary electric machine 10.

In the separation region S between each end plate portion 24, 35, the annular busbar 61 is provided and also configured to connect the busbar 61 to the power line 71. The power line 71 is drawn out to the center of the axial direction from the end plate portion 35 through the through hole 82a in the end plate portion 35. In this case, the busbar 61 can be installed and connected to the power line 71 in an area isolated from the cavity 38 of the stator holder 33 by the end plate portion 35, and a suitable configuration can be realized in terms of protection of those busbars 61 and the power line connections.

In the configuration in which the annular busbar 61 is disposed on the inner side of the coil end portion of the stator winding 31 in the radial direction, and the busbar 61 and the power line 71 are electrically connected on the inner side of the busbar 61 in the radial direction, the busbar 61 and the power line connection portion are disposed side by side in the radial direction, the shaft length of the rotary electric machine 10 can be shortened by arranging the coil ends of the stator winding 31, the busbar 61 and the power line connection in the radial direction. In this case, the power line connection (connection between busbar 61 and power line 71) is located in the radial direction, but by providing a crank-shaped bent portion 71a in the power line 71, the power line 71 can be placed closer to the inner circumference wall of the stator holder 33 on the inner circumference side of the stator holder 33. As a result, the hollow space on the inner circumference side of the stator holder 33 is utilized more effectively.

In the stator winding 31, the crossing portions 43, 44 of each partial winding 41 are positionally regulated on the open end side of the stator holder 33 by the position regulating unit including the overhang 36 protruding radially outward. As a result, each of the partial windings 41, which are arranged side by side in the circumferential direction, is supported in a stable condition. Here, according to the above position regulation structure, it may be difficult to secure the installation space for busbar 61 on the open end side of the stator holder 33, but the busbar 61 is arranged on the opposite side of the open end of the stator holder 33 as described above, which enables a suitable arrangement of busbar 61.

In the separation region S between each end plate portion 24, 35, the connection portion between the coil end portion of the stator winding 31 and the wiring unit is covered with the resin layer 90, which prevents inconveniences such as short circuits and deterioration due to exposure of the connection portion. In addition, because positioning of the wiring unit by the resin layer 90 becomes possible, a configuration for positioning of the wiring unit can be simplified.

The end plate portion 35 of the stator holder 33 is axially opposed to the crossing portion 43 bent inward in the radial direction in the partial winding 41, and the resin layer 90 is formed by resin molding in the opposed portion to the extent including part of the wiring unit. As a result, inconveniences such as shorts and deterioration caused by exposed the wiring unit on the coil end area CE1 side are reduced.

At the axial end of the stator holder 33 on the opposite side of the end plate portion 35, the overhang 36 faces axially in the same direction as the side of the end plate portion 35 toward the crossing portion 43 bent radially outward in the partial winding 41. In this case, on both axial sides of the stator holder 33 (the side of the end plate portion 35 and the opposite side), resin filling can be performed from the same side in the axial direction, which simplifies the formation of the resin layer 90 in a configuration having the resin layers 90 on both axial sides.

### Second Embodiment

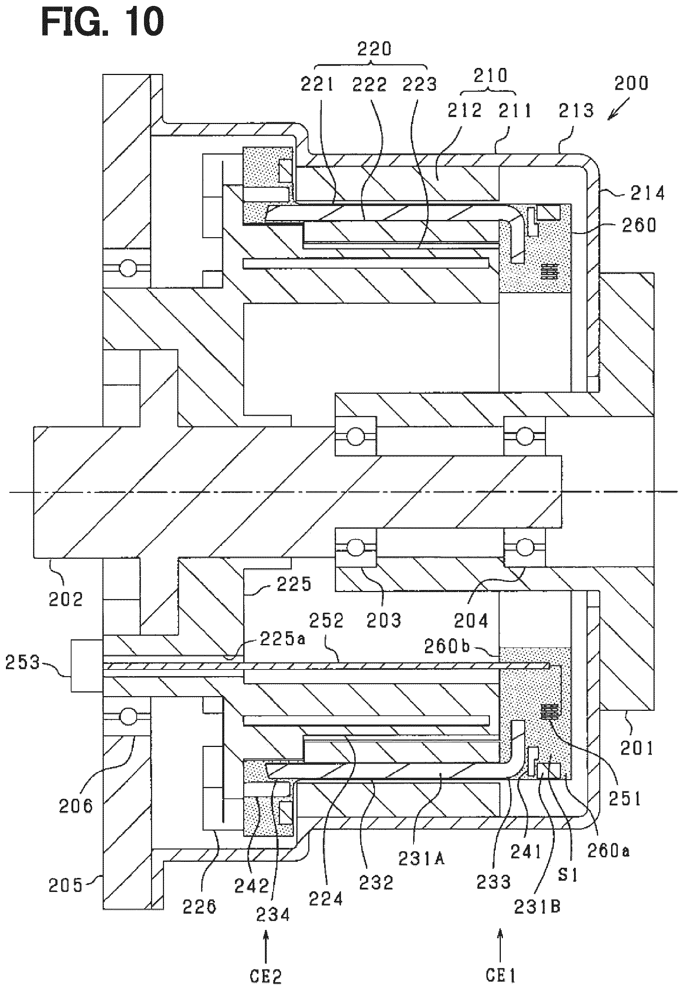

Next, a rotary electric machine 200 in a second embodiment will be explained mainly in terms of differences from the previously described rotary electric machine 10. The rotary electric machine 200 is a multiphase alternating-current motor of an outer-rotor-type and a surface-magnet-type, and is used as an in-wheel motor of a vehicle, for example. FIG. 10 is a longitudinal cross-sectional view of the rotary electric machine 200.

The rotary electric machine 200 has a rotor 210 and a stator 220 located on an inner side of the rotor 210 in a radial direction. The rotor 210 and the stator 220 are arranged radially opposite each other with an air gap between them. The rotor 210 is integrated with a hub 201 that is fixed to an unshown wheel, while the stator 220 is integrated with an abbreviated cylindrical spindle 202 that is fixed to an unshown car body. The hub 201 is rotatably supported against the spindle 202 by a pair of bearings 203, 204.

A rotor cover 205 is fixed to one end of the rotor 210 in the axial direction (base end of spindle 202). The rotary cover 205 has a circular annular plate shape. The rotary cover 205 is fixed to the rotary 210 with fasteners such as bolts, with a bearing 206 interposed in the radial direction opposite the stator 220.

The rotor 210 includes a rotary carrier 211 having a substantially cylindrical shape, and a magnet unit 212 having an annular shape and fixed to the rotary carrier 211. The magnet unit 212 corresponds to a "magnet flux generating unit". The rotary carrier 211 has a cylindrical portion 213 that has a cylindrical shape and an end plate portion 214 that is provided on one end of the cylindrical portion 213 in the axial direction and extends in the radial direction. The magnet unit 212 is fixed to a radially inner surface of the cylindrical portion 213. The other end side in the axial direction of the rotary carrier 211 is open. The rotary carrier 211 functions as a magnet holding member. The magnet unit 212 has the same configuration as the previously described magnet unit 22, and its description is omitted.

The stator 220 includes a stator winding 221, a stator core 222, and a stator holder 223. The stator core 222 is arranged on an outside of the stator holder 223 in the radial direction, and the stator core 222 and the stator holder 223 are integrated. The stator winding 221 is mounted on an outside of the stator core 222 in the radial direction. The stator holder 223 has an abbreviated bottomed cylindrical shape and has a cylindrical portion 224, a bottom portion 225 at one end in the axial direction, and an overhang 226 at the other end in the axial direction toward the outside in the radial direction. The bottom portion 225 is located on the opposite side of the rotary carrier 211 in the axial direction from the end plate portion 214. An end face in the axial direction opposite the bottom portion 225 in the stator holder 223 faces the end plate portion 214 of the rotary carrier 211. In the present embodiment, the anti-bottom side of the stator holder 223 is the coil end area CE1, and the bottom portion 225 side is the coil end area CE2. The stator holder 223 corresponds to a "base". An assembly of the stator core 222 and the stator holder 223 may be configured to correspond to the base. The stator 220 has a teeth-less structure similar to the previously mentioned stator 30.

The stator winding 221, like the previously described stator winding 31, is a three-phase winding and consists of partial windings 231 that are unit coils. A partial winding 231 is an air-core coil composed of windings of conductor material, and has a pair of intermediate conductor portions 232 provided at predetermined intervals in the circumferential direction and a pair of crossing portions 233, 234 connecting the pair of intermediate conductor portions 232 at both ends in the axial direction respectively, and the pair of intermediate conductor portions 232 and the pair of crossing portions 233, 234 are formed into a tubular shape. The intermediate conductor portions 232 of each phase are arranged in close proximity to each other in the circumferential direction, since one of the intermediate conductor portions 232 in the partial winding 231 of the other phase is positioned between the pair of intermediate conductor portions 232 in the partial winding 231.

Of the respective crossing portions 233, 234, one of the crossing portions 233 is formed by bending in the radial direction, while the other crossing portion 234 is formed without bending in the radial direction. Each partial winding 231 includes a partial winding 231A (first partial winding) with the crossing portion 233 bent inward in the radial direction and a partial winding 231B (second partial winding) with the crossing portion 233 bent outward in the radial direction.

The stator winding 221 is secured to the stator holder 223 by position regulating units 241, 242 at each coil end on both axial sides.

At the axial end of the stator 220, there is an annular busbar 251 that is electrically connected to each partial winding 231 of the stator winding 221. The busbars 251 may include busbars for each phase as conductive members and for a neutral wire, and may be integrated as a wiring module, for example. The busbar 251 is located in an area on the axially opposite side of the coil end of both axial sides of the stator 220 from the bottom portion 225 of the stator holder 223 (on the side of the end plate portion 214 of rotary carrier 211). That is, the busbar 251 is located in the separation region S1 between the stator holder 223 and the end plate portion 214 on the side opposite to the end plate portion 214 of the rotary carrier 211 on the axial sides of the stator holder 223.

The power lines 252 for each phase are connected to the busbar 251. The power lines 252 of each phase may be configured as relay wire members by being integrated by insulating materials. In the relay wire member, the power lines 252 are made of plate conductors (busbars) and are covered in a circumferential arrangement. Each of the power lines 252 is arranged in a row so that the busbar plate surfaces are aligned in a straight line. As a result, the relay wire member has a flat plate shape. The relay wire member is attached to the base with its flat surface facing the radially inner surface of the stator holder 223. The relay wire member may be attached to the stator holder 223 at a distance from the radially inner surface of the stator holder 223. The busbar 251 and the power lines 252 correspond to a "wiring unit".

The power lines 252 (relay wire member) extend axially in the stator holder 223 and are electrically connected to a terminal 253 fixed to the axial end face of the stator holder 223 via a through hole 225a in the bottom portion 225 of the stator holder 223.

In the rotary electric machine 200, resin molding is applied in an assembly in which the stator winding 221 and the busbar 251 are assembled to the stator holder 223, and a resin layer 260 is formed at least to an extent including each coil end on both sides in the axial direction. In FIG. 10, a dot-imparting area is the resin layer 260.

In the rotary electric machine 200, the busbar 251 is provided in the separation region S1 formed between the end plate portion 214 of the rotary carrier 211 and the axial end face of the stator holder 223, and the power line 252 extends axially inside the busbar 251 in the radial direction. In this case, a coil end mold portion 260a on the coil end area CE1 side of the resin layer 260 is located in the separation region S1, and the power line 252 is drawn from that coil end mold portion 260a toward the axial center side in the stator holder 223.

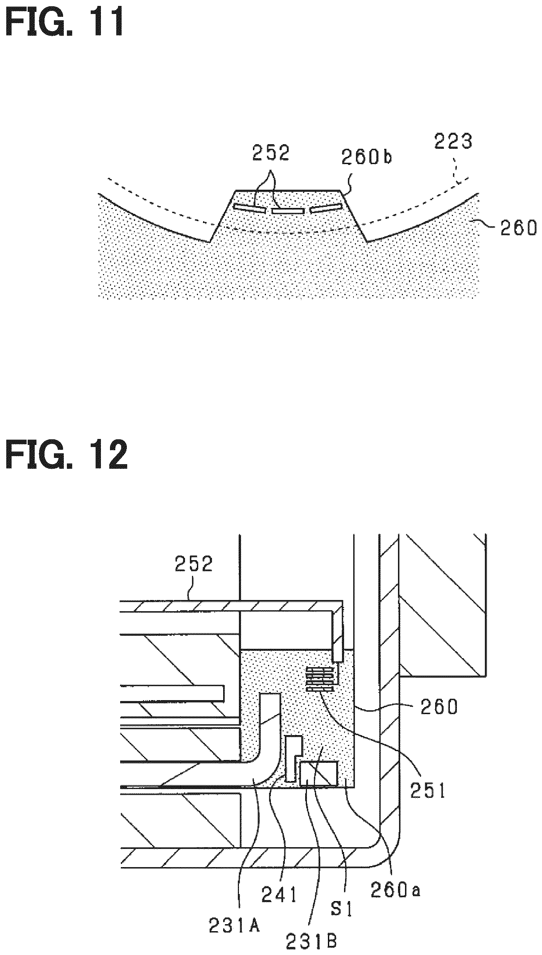

In detail, as shown in FIG. 11, the coil end mold portion 260a is circular in the circumferential direction, and a part of the circumferential direction has a protrusion 260b (overhanging portion) that projects inward in the radial direction from the cylindrical portion 224 of the stator holder 223. The protrusion 260b protrudes inward from the radially inner surface of the stator holder 223, and the power line 252 is drawn axially from its axial end face. In a configuration of FIG. 11, the resin layer 260 is formed so that the protrusion 260b of the coil end mold portion 260a does not overlap the inner circumference of the stator holder 223. Alternatively, the resin layer 260 may be formed so that the protrusion 260b overlaps the radially inner surface of the stator holder 223.

The resin layer 260 consists of the following. In the stator holder 223, the coil end area CE1 side (first end) of both axial ends is axially opposite to the crossing portion 233 bent inward in the radial direction in the partial winding 231A, and the resin layer 260 is formed on the opposite part to the extent that it includes part of the wiring unit. The overhang 226 at the coil end area CE2 side (second end) of the two axial ends faces axially in the same direction as the coil end area CE1 side to the crossing portion 233 bent radially outward in the partial winding 231B, and the resin layer 260 is formed in that facing portion by resin molding.

According to the present embodiment, the wiring unit can be fixed by the resin layer 260 in the narrow separation region S1 between the axial end face of the stator holder 223 and the end plate portion 214 of the rotary carrier 211. The power line 252 is drawn out of the resin layer 260, which allows the power line 252 to be suitably drawn out while efficiently utilizing a space between the axial end face of the stator holder 223 and the end plate portion 214 of the rotary carrier 211. As a result, the wiring unit connected to the stator winding 221 can be suitably arranged.

As the resin layer 260, an overhanging portion is formed that extends radially inward from the cylindrical portion 224 of the stator holder 223, and the power line 252 is drawn out axially from the axial end face of the overhanging portion. In this case, the power line 252 extending axially from one end of the stator 220 in the axial direction can be suitably resin-molded at least to an extent including the coil end area CE1.

The axial end face of the stator holder 223 on the CE1 side is axially opposed to the crossing portion 233 bent inward in the radial direction in the partial winding 231, and the resin layer 260 is formed in the opposed portion to an extent including part of the wiring unit. As a result, inconveniences such as shorts and deterioration caused by exposed the wiring unit on the coil end area CE1 side are reduced.

On the CE2 side in the stator holder 223, the overhang 226 faces axially from the same direction as the CE2 side to the crossing portion 233 bent radially outward in the partial winding 231. In this case, on both axial sides of the stator holder 223 (CE1 side and CE2 side), resin filling can be performed from the same side in the axial direction, which simplifies the formation of the resin layer 260 in a configuration having the resin layers 260 on both axial sides.

### Modifications

In the first embodiment, the stator winding 31 is not limited to one using the partial windings 41, and may be configured to be formed by winding a conductor through wave winding. In this case, the stator winding 31 formed in a cylindrical shape through wave winding may be assembled to the stator core 32 formed in a cylindrical shape. The same is true for the stator winding 221 of the second embodiment.

In each of the above embodiments, a surface magnet type rotor was used as the rotor 20, 210, but instead of this, an embedded magnet type rotor or a field coil type rotor may be used.

In the second embodiment, the resin layer 260 may be configured as shown in FIG. 12. In FIG. 12, on the coil end area CE1 side, the coil end mold portion 260a, which has a circumferentially circular shape, has no protrusion 260b (overhanging portion) protruding inward in the radial direction from the cylindrical portion 224 of the stator holder 223. In this configuration, the power line 252 (relay wire member) is drawn radially inward from the coil end mold portion 260a and extended axially by bending.

The disclosure in the present specification is not limited to the exemplified embodiments. The disclosure includes exemplary embodiments and modifications by those skilled in the art based on the exemplary embodiments. For example, the disclosure is not limited to the component and/or element combinations described in the embodiments. The disclosure may be provided in various combinations. The disclosure may include additional portions that can be added to the embodiments. The disclosure includes those in which the components and/or elements of the embodiments are omitted. The disclosure includes the reallocation or combination of components and/or elements between one embodiment and another embodiment. The disclosed technical scope is not limited to the descriptions of the embodiments. It should be understood that part of disclosed technical scope is indicated by recitation of claims, and includes every modification within the equivalent meaning and the recitation of the scope of claims.

The technical ideas extracted from the above-described embodiments will be described below.

### Configuration 1

A rotary electric machine includes a rotor (20) and a stator (30). The rotor (20) has a magnetic flux generating unit (22) that generates magnetic flux at each circumferentially aligned magnetic pole and a rotary carrier (21) that is cylindrical and holds the magnetic flux generating unit. The stator (30) has a stator winding (31) and a base (33) that is cylindrical and to which the stator winding is assembled. The rotary electric machine (10) is an outer rotor type in which the rotor (20) is arranged outside the stator (30) in a radial direction. The rotary carrier (21) has a first end plate portion (24) at one end of the rotor in an axial direction, extending in the radial direction, and the other end of the rotor in the axial direction is open. The base (33) has a second end plate portion (35) at one end of the stator in the axial direction, extending in the radial direction, and the other end of the stator in the axial direction is open. The stator winding (31) is connected to a wiring unit (60, 70) that supplies electric power to the stator winding. The first end plate portion (24) of the rotary carrier (21) and the second end plate portion (35) of the base (33) are arranged facing each other on the same side in the axial direction. The wiring unit (60, 70) is drawn out from the second end plate portion (35) to an intermediate portion in the axial direction through a separation region between the first end plate portion (24) and the second end plate portion (35) and a through hole (82a) provided in the second end plate portion (35) and penetrating in the axial direction.

### Configuration 2

The rotary electric machine according to configuration 2 has a stator winding that is a multiphase winding with multiple phase windings. Each phase has a power line (71) provided as the wiring unit. The power line (71) is one of the power lines. The power lines are integrated with insulating material to form a relay wire member (70). Each power line is drawn out through the through hole to the intermediate portion in the axial direction from the second end plate portion, with the relay wire member attached to the base.

### Configuration 3

The rotary electric machine according to configuration 2 has power lines arranged in the circumferential direction. The relay wire member is a flat plate. The relay wire member is attached to the base such that a flat surface of the relay wire member faces a radially inner surface of the base.

### Configuration 4

The rotary electric machine according to configuration 3 includes a relay wire member attached to the base at a distance from the radially inner surface of the base.

### Configuration 5

The rotary electric machine according to any one of configurations 1 to 4 has a wiring unit that includes a busbar (61) and a power line (71). The busbar (61) is provided in the separation region between the first end plate portion and the second end plate portion in an annular shape and is connected to a coil end portion of the stator winding. The power line (71) is connected to the busbar at the separation region and inputs and outputs electric power to the stator winding. The power line (71) is drawn out from the second end plate portion through the through hole to the intermediate portion in the axial direction.

### Configuration 6

The rotary electric machine according to configuration 5 has a coil end portion of the stator winding that protrudes axially from an end face of the base member in the axial direction. The busbar is located on the inner side of the coil end portion in the radial direction. The busbar is electrically connected to the power line on the inner side of the busbar in the radial direction. The power line has a bent portion (71a) that is cranked radially outward from the connection with the busbar.

### Configuration 7

The rotary electric machine according to configuration 5 or 6 has a stator winding with a phase winding that includes partial windings (41) per phase. Each partial winding is an air-core coil. The partial winding includes a pair of intermediate conductor portions (42) provided at a predetermined distance in the circumferential direction, and crossing portions (43, 44) provided at one end and the other end of the pair of intermediate conductor portions in the axial direction, connecting the pair of intermediate conductor portions in a circular manner. The intermediate conductor portions of each of the different partial windings are arranged in close proximity and in the circumferential direction. A position regulating unit (36) is provided at an open end of the base on the opposite side of the second end plate portion in the axial direction and projects outwardly in the radial direction to regulate the position of the crossing portions of the partial winding.

### Configuration 8

The rotary electric machine according to any one of configurations 1 to 7 includes a resin layer (90) formed by resin molding in the separation region between the first end plate portion and the second end plate portion. This resin layer covers the coil end portion of the stator winding and the wiring unit. Configuration 9

The rotary electric machine according to any one of configuration 1 to 6 includes a stator winding with a phase winding that includes partial windings (41) per phase. Each partial winding is an air-core coil and includes: a pair of intermediate conductor portions (42) provided at a predetermined distance in the circumferential direction; crossing portions (43, 44) provided at one end and the other end of the pair of intermediate conductor portions in the axial direction, connecting the pair of intermediate conductor portions in a circular manner. The intermediate conductor portions of each phase are arranged in close proximity to each other in the circumferential direction by placing one of the intermediate conductor portions of the partial winding of the other phase between the pair of intermediate conductor portions of the partial winding. The partial windings include: a first partial winding (41A) in which only the crossing portion on one end in the axial direction is bent inward in the radial direction; a second partial winding (41B) in which only the crossing portion on the other end in the axial direction is bent outward in the radial direction. The second end plate portion of the base is axially opposite to the crossing portion bent inward in the radial direction in the first partial winding. A resin layer (90) is formed in an opposite portion by resin molding to cover a region including the wiring unit. An overhang (36) provided at one end opposite to the second end plate portion in the axial direction and extending outward in the radial direction faces the crossing portion bent radially outward in the second partial winding in the axial direction from the same direction as the side of the second end plate portion. A resin layer (90) is formed in a facing portion facing the overhang by resin molding.

### Configuration 10

A rotary electric machine includes a rotor and a stator. The rotor (20, 210) has a magnetic flux generating unit (22, 212) that generates magnetic flux at each circumferentially aligned magnetic pole. The rotor also includes a rotary carrier (21, 211) that is cylindrical and holds the magnetic flux generating unit. The stator (30, 220) has a stator winding (31, 221) and a cylindrical base (33, 223) to which the stator winding is assembled. The rotary electric machine (10, 200) is an outer rotor type, meaning the rotor is arranged outside the stator in the radial direction. The rotary carrier has an end plate portion (24, 214) provided at one end of the rotor in the axial direction, extending in the radial direction. One end face of the base in the axial direction faces the end plate portion of the rotary carrier. The stator winding is connected to a wiring unit (60, 70, 251, 252) that supplies electric power to the stator winding. The wiring unit is arranged in an area including a separation region between the end plate portion and the base on the side facing the end plate portion of the rotary carrier, on both sides of the base in the axial direction. A resin layer (90, 260) covering a portion of the wiring unit is provided in the separation region, and the wiring unit is drawn out from the resin layer.

### Configuration 11

The rotary electric machine according to configuration 10 includes a wiring unit. The wiring unit includes a busbar (251) provided in the separation region between the end plate portion of the rotary carrier and the end face of the base in the axial direction. The busbar is annular and connected to a coil end of the stator winding. A power line (252) is connected to the busbar at the separation region and is responsible for the input and output of electric power to the stator winding. The resin layer has an overhang (260b) that extends radially inward from a cylindrical portion (224) of the base. The wiring unit is drawn out from the end face of the overhang in the axial direction.

### Configuration 12

The rotary electric machine according to configuration 10 or 11 includes a stator winding with phase windings that consist of partial windings (41, 231) per phase. Each partial winding is an air-core coil. The partial winding includes a pair of intermediate conductor portions (42, 232) provided at a predetermined distance in the circumferential direction. It also includes crossing portions (43, 44, 233, 234) provided at one end and the other end of the pair of intermediate conductor portions in the axial direction, connecting the pair of intermediate conductor portions in a circular manner. The intermediate conductor portions of each phase are arranged in close proximity to each other in the circumferential direction by placing one of the intermediate conductor portions of the partial winding of the other phase between the pair of intermediate conductor portions of the partial winding. The partial windings include a first partial winding (41A, 231A) in which only the crossing portion on one end in the axial direction is bent inward in the radial direction. There is also a second partial winding (41B, 231B) in which only the crossing portion on the other end in the axial direction is bent outward in the radial direction. A first end portion of the base in the axial direction is axially opposite to the crossing portion bent inward in the radial direction in the first partial winding. The resin layer is formed in an opposite portion to a region including a portion of the wiring unit. An overhang (36, 226) provided at a second end portion of the base in the axial direction and extending outward in the radial direction faces the crossing portion bent radially outward in the second partial winding in the axial direction from the same direction as the side of the first end portion. A resin layer (90, 260) is formed in a facing portion facing the overhang by resin molding.

Although the present disclosure has been described in accordance with the examples, it is understood that the present disclosure is not limited to such examples or structures. The present disclosure encompasses various modifications and variations within the scope of equivalents. In addition, various combinations and modes, and other combinations and modes including only one element, more elements, or less elements are also within the scope and idea of the present disclosure.

## Claims

1. A rotary electric machine comprising;
a rotor (20) having a magnetic flux generating unit (22) that generates magnetic flux at each circumferentially aligned magnetic pole and a rotary carrier (21) that is cylindrical and holds the magnetic flux generating unit; and
a stator (30) having a stator winding (31), and a base (33) being cylindrical and to which the stator winding is assembled, wherein
the rotary electric machine (10) is an outer rotor type rotary electric machine in which the rotor is arranged outside the stator in a radial direction,
the rotary carrier has a first end plate portion (24) provided at one end of the rotor in an axial direction and extending in the radial direction, and the other end of the rotor in the axial direction is open,
the base has a second end plate portion (35) provided at one end of the stator in the axial direction and extending in the radial direction, and the other end of the stator in the axial direction is open,
the stator winding is connected to a wiring unit (60, 70) that supplies electric power to the stator winding,
the first end plate portion of the rotary carrier and the second end plate portion of the base are arranged facing each other on the same side among both sides in the axial direction, and
the wiring unit is drawn out from the second end plate portion to an intermediate portion in the axial direction through a separation region between the first end plate portion and the second end plate portion and a through hole (82a) provided in the second end plate portion and penetrating in the axial direction.

2. The rotary electric machine according to claim 1, wherein
the stator winding is a multiphase winding including multiple phase windings, and has a power line (71) provided for each phase as the wiring unit,
the power line is one of power lines,
the power lines are integrated with insulating material to form a relay wire member (70), and
each power line is drawn out through the through hole to the intermediate portion in the axial direction from the second end plate portion in a state in which the relay wire member is attached to the base.

3. The rotary electric machine according to claim 2, wherein
the power lines are arranged in the circumferential direction,
the relay wire member is a flat plate, and
the relay wire member is attached to the base in a state that a flat surface of the relay wire member faces a radially inner surface of the base.

4. The rotary electric machine according to claim 3, wherein
the relay wire member is attached to the base at a distance from the radially inner surface of the base.

5. The rotary electric machine according to claim 1, wherein
the wiring unit includes: a busbar (61) provided in the separation region between the first end plate portion and the second end plate portion, in an annular shape, and connected to a coil end portion of the stator winding; and a power line (71) connected to the busbar at the separation region and inputting and outputting electric power to the stator winding, and
the power line is drawn out from the second end plate portion through the through hole to the intermediate portion in the axial direction.

6. The rotary electric machine according to claim 5, wherein
the coil end portion of the stator winding protrudes axially from an end face of the base in the axial direction,
the busbar is located on an inner side of the coil end portion in the radial direction,
the busbar is electrically connected to the power line on an inner side of the busbar in the radial direction, and
the power line has a bent portion (71a) that is cranked radially outward from a connection with the busbar.

7. The rotary electric machine according to claim 5, wherein
the stator winding has a phase winding including partial windings (41) per phase,
the partial winding of the partial windings is an air-core coil,
the partial winding includes:
pair of intermediate conductor portions (42) provided at a predetermined distance in the circumferential direction; and
crossing portions (43, 44) provided at one end and the other end of the pair of intermediate conductor portions in the axial direction and connecting the pair of intermediate conductor portions in a circular manner,
the intermediate conductor portions of each of the different partial windings are arranged in close proximity and in the circumferential direction, and
a position regulating unit (36) is provided at an open end of the base on an opposite side of the second end plate portion in the axial direction and is provided in a state projecting outwardly in the radial direction for position regulating the crossing portions of the partial winding.

8. The rotary electric machine according to any one of claims 1 to 7, wherein
a resin layer (90) is formed by resin molding in the separation region between the first end plate portion and the second end plate portion, covering the coil end portion of the stator winding and the wiring unit.

9. The rotary electric machine according to any one of claims 1 to 6, wherein
the stator winding has a phase winding including partial windings (41) per phase,
the partial winding of the partial windings is an air-core coil,
the partial winding includes:
a pair of intermediate conductor portions (42) provided at a predetermined distance in the circumferential direction; and
crossing portions (43, 44) provided at one end and the other end of the pair of intermediate conductor portions in the axial direction and connecting the pair of intermediate conductor portions in a circular manner,
the intermediate conductor portions of each phase are arranged in close proximity to each other in the circumferential direction by placing one of the intermediate conductor portions of the partial winding of the other phase between the pair of intermediate conductor portions of the partial winding,
the partial windings include: a first partial winding (41A) in which only the crossing portion on one end in the axial direction is bent inward in the radial direction; and a second partial winding (41B) in which only the crossing portion on the other end in the axial direction is bent outward in the radial direction,
the second end plate portion of the base is axially opposite to the crossing portion bent inward in the radial direction in the first partial winding,
a resin layer (90) is formed in an opposite portion by resin molding to a region including the wiring unit,
an overhang (36) provided at one end opposite to the second end plate portion in the axial direction and extending outward in the radial direction faces the crossing portion bent radially outward in the second partial winding in the axial direction from the same direction as the side of the second end plate portion, and
a resin layer (90) is formed in a facing portion facing the overhang by resin molding.

10. A rotary electric machine comprising;
a rotor (20, 210) having a magnetic flux generating unit (22, 212) that generates magnetic flux at each circumferentially aligned magnetic pole and a rotary carrier (21, 211) that is cylindrical and holds the magnetic flux generating unit; and
a stator (30, 220) having a stator winding (31, 221), and a base (33, 223) being cylindrical and to which the stator winding is assembled, wherein
the rotary electric machine (10, 200) is an outer rotor type rotary electric machine in which the rotor is arranged outside the stator in a radial direction,
the rotary carrier has an end plate portion (24, 214) provided at one end of the rotor in an axial direction and extending in the radial direction,
one end face of the base in the axial direction faces the end plate portion of the rotary carrier,
the stator winding is connected to a wiring unit (60, 70, 251 252) that supplies electric power to the stator winding,
the wiring unit is arranged in an area including a separation region between the end plate portion and the base on a side facing the end plate portion of the rotary carrier in on both sides of the base in the axial direction, and
a resin layer (90, 260) covering a portion of the wiring unit is provided in the separation region, and the wiring unit is drawn out from the resin layer.

11. The rotary electric machine according to claim 10, wherein
The wiring unit includes:
a busbar (251) provided in the separation region between the end plate portion of the rotary carrier and the end face of the base in the axial direction, being annular and connected to a coil end of the stator winding; and
a power line (252) connected to the busbar at the separation region and inputting and outputting of electric power to the stator winding,
the resin layer has an overhang (260b) that extends radially inward from a cylindrical portion (224) of the base, and
the wiring unit is drawn out from the end face of the overhang in the axial direction.

12. The rotary electric machine according to claim 10, wherein
the stator winding has a phase winding including partial windings (41, 231) per phase,
the partial winding of the partial windings is an air-core coil,
the partial winding includes:
a pair of intermediate conductor portions (42, 232) provided at a predetermined distance in the circumferential direction; and
crossing portions (43, 44, 233, 234) provided at one end and the other end of the pair of intermediate conductor portions in the axial direction and connecting the pair of intermediate conductor portions in a circular manner,
the intermediate conductor portions of each phase are arranged in close proximity to each other in the circumferential direction by placing one of the intermediate conductor portions of the partial winding of the other phase between the pair of intermediate conductor portions of the partial winding,
the partial windings include: a first partial winding (41A, 231A) in which only the crossing portion on one end in the axial direction is bent inward in the radial direction; and a second partial winding (41B, 231B) in which only the crossing portion on the other end in the axial direction is bent outward in the radial direction,
a first end portion of the base in the axial direction is axially opposite to the crossing portion bent inward in the radial direction in the first partial winding,
the resin layer is formed in an opposite portion to a region including a portion of the wiring unit,
an overhang (36, 226) provided at a second end portion of the base in the axial direction and extending outward in the radial direction faces the crossing portion bent radially outward in the second partial winding in the axial direction from the same direction as the side of the first end portion, and
a resin layer (90, 260) is formed in a facing portion facing the overhang by resin molding.
